# FASCICULE DE BREVET EUROPEEN

(11) **EP 1 596 649 B1**
(45) Date de publication et mention de la délivrance du brevet: **20.09.2006**
(21) Numéro de dépôt: 04714346.6
(22) Date de dépôt: 25.02.2004
(51) Int. Cl.: A01G 9/02

(54) **DISPOSITIF A RESERVE D'EAU POUR LA CULTURE DE SURFACE ENGAZONNEE**
VORRICHTUNG MIT WASSERVORRAT ZUR KULTIVIERUNG VON GRASFLÄCHEN
WATER STORAGE DEVICE FOR GROWING A LAWN SURFACE

(30) Priorité: 25.02.2003 FR 0302289
(43) Date de publication de la demande: 23.11.2005
(73) Titulaire: PRM, 01810 Groissiat (FR)
(72) Inventeur: MATHY, Bernard, F-01100 Bellignat (FR)
(74) Mandataire: Delorme, Nicolas
(86) Numéro de dépôt international: PCT/FR2004/000423
(87) Numéro de publication internationale: WO 2004/075628

(56) Documents cités:
- EP-A- 0 321 741
- WO-A-00/64253
- FR-A- 2 245 276
- GB-A- 2 085 702
- US-A- 3 751 852
- US-B1- 6 253 487

## Description

La présente invention concerne un dispositif à réserve d'eau pour la culture de surface engazonnée.

Le document US-B1-6253487 décrit un dispositif à réserve d'eau pour être placé sur le toit, véranda ou terrasse d'un bâtiment pour entre autres y cultiver du gazon.

Dans les régions arides, comme par exemple les régions du bassin méditerranéen, la culture de surfaces engazonnées pose plusieurs problèmes.

En effet, dans ces régions, la couche de terre arable est faible, voire inexistante, et la chaleur très importante qui y règne, fait que l'arrosage est sans effet notable puisque l'eau épandue sur le gazon s'évapore presque immédiatement.

De plus, les sites que l'on pourrait souhaiter engazonner ou cultiver qui sont des sites naturels présentent donc un relief qui n'est pas toujours rigoureusement plan et qui peut présenter certains obstacles tels que par exemple des arbres.

Un but de l'invention est donc de proposer un dispositif comprenant une réserve d'eau pour la culture de surface engazonnée qui puisse s'adapter aux accidents de terrain sur lequel il est placé.

A cet effet, le dispositif selon l'invention comprend :
- un bac présentant une paroi de fond et des parois latérales, le bac étant destiné à contenir un liquide, et
- un plateau prenant place dans le bac, destiné à supporter un substrat de culture et présentant au moins un puits dont l'extrémité inférieure communique avec le liquide contenu dans le bac.

Selon la revendication principale, le bac et le plateau présentent chacun une zone de rupture en regard l'une de l'autre dont la découpe permet de diviser le dispositif.

Grâce à cette disposition, le dispositif peut être adapté aux accidents de terrain.

Selon une caractéristique particulièrement avantageuse, la paroi de fond du bac forme avec une de ses parois latérales un angle inférieur à 90°, ce qui permet de disposer le dispositif sur des zones présentant une pente.

Selon une forme de réalisation préférée, la zone de rupture ménagée dans le bac est délimitée par deux cloisons et la zone de rupture du plateau est délimitée par deux nervures.

De préférence, le bac présente une forme de carré présentant deux zones de rupture reliant le milieu de ses deux côtés opposés et le plateau présente une forme de carré présentant deux zones de rupture reliant le milieu de deux côtés opposés.

Pour assurer un meilleur appui du plateau, le bac présente une forme de carré présentant deux zones de rupture reliant le milieu de deux côtés opposés et le plateau présente une forme de carré présentant deux zones de rupture reliant le milieu de deux côtés opposés.

De façon avantageuse, au moins une échancrure est pratiquée dans la partie supérieure des parois latérales du bac, ce qui permet d'assurer une continuité du substrat lorsque plusieurs dispositifs sont en contact les uns des autres.

Selon une possibilité, au moins un cavalier est engagé sur la partie supérieure de la paroi, ce cavalier venant en appui contre le plateau.

De plus, des lumières sont percées dans la paroi de fond du puits.

Dans une variante de réalisation, au moins l'un des coins du bac et du plateau présente une forme d'arc de cercle.

Selon une caractéristique avantageuse, le bac présente, dans au moins l'une de ses parois latérales, un embout et dans sa paroi opposée à cette dernière une ouverture équipée d'un joint périphérique susceptible de recevoir l'embout lorsque deux bacs sont disposés de manière adjacente. Cette caractéristique permet de faire communiquer et circuler l'eau d'un bac à l'autre.

De plus de façon avantageuse, le bac présente dans, au moins l'une de ces parois latérales, une réservation permettant, lorsque deux bacs sont adjacents, à l'eau de communiquer d'un bac à l'autre.

Pour la gestion de l'eau, le plateau présente des moyens d'amenée d'eau dans un bac.

Selon une forme de réalisation, la zone de rupture du plateau est constituée d'un profilé en U tourné vers le bac susceptible de recevoir un tuyau d'amenée d'eau.

Selon une autre forme de réalisation, la zone de rupture du plateau est constituée d'une canalisation dont la partie en regard du bac présente au moins une ouverture.

Selon la configuration du terrain sur lequel le dispositif est posé, la canalisation relie le milieu des deux côtés opposés du plateau ou la canalisation relie le milieu des côtés consécutifs du plateau.

Le plateau peut également présenter deux canalisations en forme de croix.

De manière avantageuse, un robinet de sélection est placé à l'intersection des canalisations.

Dans une autre forme de réalisation, la zone de rupture est délimitée par des nervures sur pouvant recevoir un couvercle pour délimiter un canal d'amenée d'eau.

Pour un meilleur positionnement du bac et, donc, du dispositif, la face inférieure du bac est pourvue de picots.

De façon avantageuse, le plateau présente sur l'un de ses cotés une emboîture mâle et sur son coté opposé au premier une emboîture femelle ce qui permet d'éviter que du substrat de culture ne tombe dans le bac lorsque le dispositif est en opération.

Pour sa bonne compréhension, l'invention est décrite en référence au dessin ci-annexé représentant à titre d'exemple non limitatif plusieurs formes de réalisation d'un dispositif à réserve d'eau selon celle-ci.
**Figure 1** est une vue en perspective éclatée d'une forme de réalisation de ce dispositif.
**Figure 2** représente une vue de dessus du dispositif.
**Figure 3** représente une vue en coupe du dispositif.
**Figure 4** représente une vue de côté.
**Figure 5** représente une vue de dessus d'une forme de réalisation de ce dispositif.
**Figure 6** représente une vue de coté d'une autre forme de réalisation du dispositif.
**Figure 7** représente en perspective une possibilité de mise en oeuvre du dispositif à réserve d'eau selon l'invention,
**Figure 8 à 15** illustrent plusieurs variantes de réalisation du dispositif

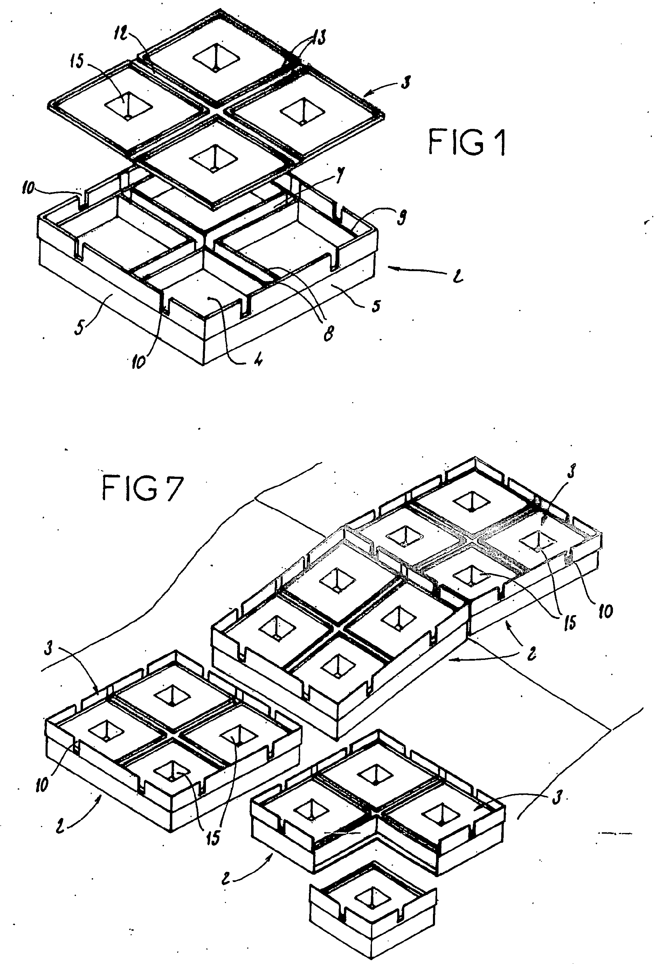

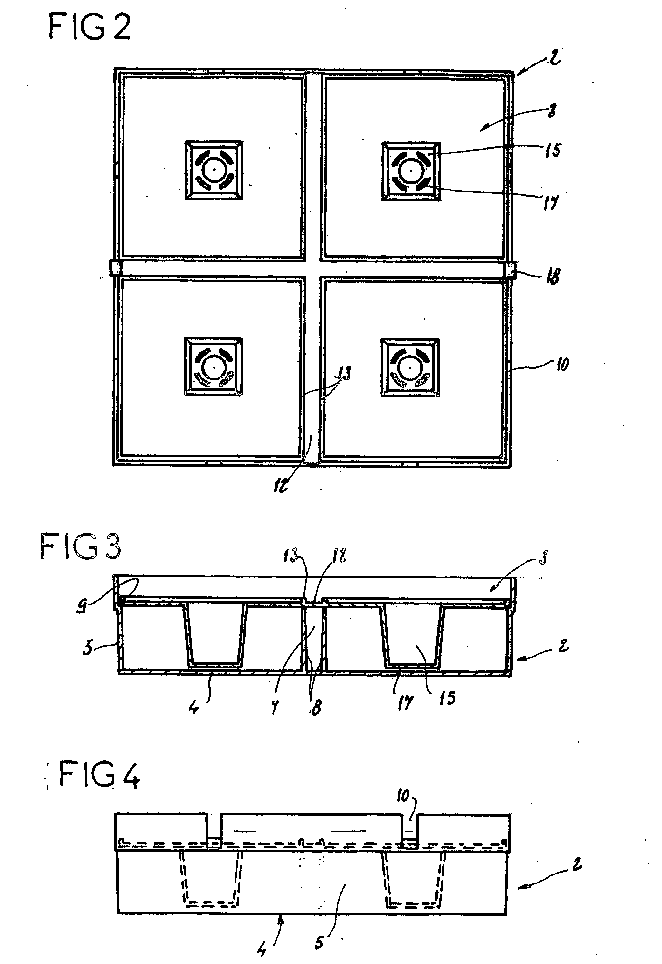

En se référant tout d'abord à la figure 1, il apparaît que le dispositif à réserve d'eau, selon l'invention, comprend deux éléments, à savoir un bac 2 et un plateau 3.

Dans la forme de réalisation représentée sur le dessin, le bac 2 présente la forme d'un carré présentant une paroi de fond 4 et quatre parois latérales 5.

Le bac 2 présente, en outre, une zone de rupture en forme de croix reliant les milieux de deux cloisons latérales opposées. Cette zone de rupture 7 est délimitée par deux cloisons 8 définissant entre elles une croix.

On note également qu'un épaulement 9 est ménagé dans chacune des parois latérales 5 du bac 2. L'épaulement 9 se situe à la même hauteur que l'extrémité supérieure des cloisons 8.

Enfin, on remarque que la partie supérieure des parois latérales 5 présente deux échancrures 10.

En ce qui concerne le plateau 3, celui-ci présente également la forme d'un carré dont les dimensions lui permettent de s'inscrire dans le bac 2.

Le plateau 3 présente également une zone de rupture 12 reliant le milieu de ses côtés opposés. La zone de rupture 12 est délimitée par des nervures 13, ces nervures se prolongeant en outre sur la périphérie du plateau 3.

Le plateau 3 est également muni de quatre puits 15 placés chacun au centre des quatre carrés délimités par la zone de rupture du plateau 12. Le fond de chacun des puits 15 est pourvu de lumières 17.

Lorsque le plateau 3 est placé dans le bac 2, le plateau 3 repose, d'une part, sur l'épaulement 9 et, d'autre part, sur l'extrémité des cloisons 8 qui délimitent la zone de rupture 7 du bac, comme on peut le voir sur la figure 3.

Pour empêcher un éventuel soulèvement du plateau 3, des cavaliers 18 sont engagés sur le bord supérieur des parois latérales 5.

Lorsque l'on souhaite réaliser une surface engazonnée dans une région dans laquelle la couche de terre arable s'avère insuffisante à cette fin, ou, lorsque les conditions de température font que l'évaporation est très forte, on place en contact les uns des autres un nombre de dispositifs suffisant pour recouvrir la surface souhaitée.

Un substrat de culture pouvant être de la terre ou du compost ou un mélange approprié est placé sur les plateaux 3 de chacun des dispositifs, ce substrat est ensuite nivelé puis tassé et peut ensuite être engazonné ou cultivé.

Lorsque cette surface est arrosée, l'excès d'eau vient alimenter le bac 2, grâce aux lumières 17 pratiquées dans le fond des puits 15. Cette eau qui est alors contenue dans le bac 2 pourra réalimenter par capillarité le substrat contenu sur le plateau lorsque celui-ci sera desséché.

Lorsque le terrain qui doit être engazonné présente un obstacle, tel qu'un arbre ou un obstacle géologique, le dispositif sera alors découpé suivant les zones de rupture respectivement du plateau 3 et du bac 2.

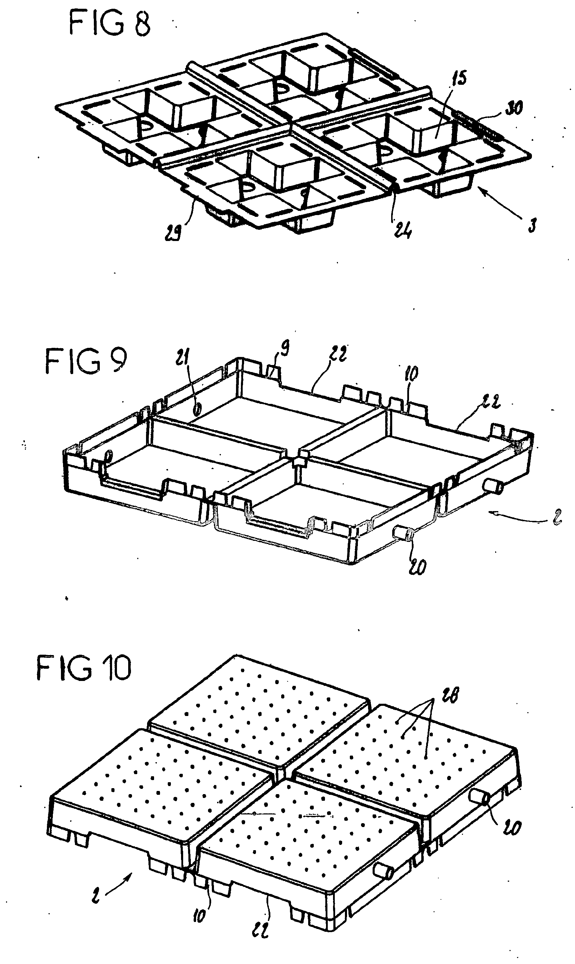

En ce qui concerne le bac 2, on constate que la zone de rupture 7 de celui-ci étant délimitée par deux cloisons 8, lorsque l'on découpe cette zone de rupture comme on peut le voir par exemple sur la figure 7, le dispositif auquel il a été ôté un élément conserve ses propriétés d'étanchéité.

Dans le cas où le terrain à engazonner présente une déclivité, il est prévu une variante de réalisation du bac 2, dans lequel la paroi de fond 4 de celui-ci forme avec une de ses parois latérales un angle inférieur à 90°, de sorte que les capactiés de retenue du substrat de culture et de retenue de l'eau d'arrosage du dispositif ne soient pas altérées.

Ainsi, comme on peut le voir sur la figure 7, l'invention propose donc un dispositif à réserve d'eau pour la culture de surface engazonnée qui peut s'adapter à différentes configurations de terrain, d'une part, en étant sécable pour pouvoir adapter le dispositif à des obstacles que pourrait comprendre la surface à engazonner et, d'autre part, pour s'adapter à des accidents de terrain de celle-ci.

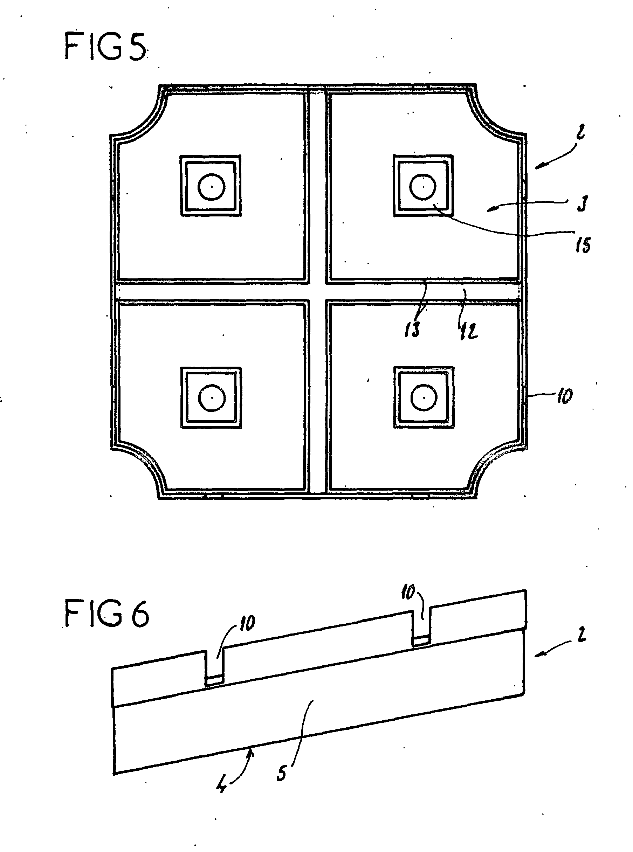

La figure 5 illustre un mode de réalisation du dispositif dans lequel les coins du bac 2 et du plateau 3 sont en arc de cercle, de sorte que lorsque les dispositifs sont placés en contact les uns des autres, une ouverture tubulaire est ménagée entre chacun d'eux. Par cette ouverture tubulaire, il est, alors, possible de faire passer une buse d'arrosage qui, grâce à une ouverture ménagée dans le fond du bac 2, permet d'alimenter en eau directement le bac 2.

La forme de réalisation illustrée à la figure 5 est particulièrement adaptée aux zones très chaudes dans lesquelles l'évaporation est très importante.

Comme on peut le voir à la figure 9, le bac présente, dans l'une de ses parois latérales, deux embouts 20 et dans sa paroi opposée à cette dernière, deux ouvertures 21 équipées chacune d'un joint périphérique susceptible de recevoir l'embout 20 lorsque deux bacs 2 sont disposés de manière adjacente. Cette caractéristique permet de faire communiquer et circuler l'eau d'un bac à l'autre.

On voir également sur cette figure que le bac 2 présente dans ses parois latérales, des réservations 22 permettant, lorsque deux bacs 2 sont adjacents, à l'eau de communiquer d'un bac à l'autre.

Pour la gestion de l'amenée d'eau, plusieurs formes de réalisation du plateau sont possibles.

En se référant à la figure 8, on peut voir que la zone de rupture du plateau 3 est constituée d'un profilé 24 en U tourné vers le bac susceptible de recevoir un tuyau d'amenée d'eau.

Il est également envisagé que la zone de rupture du plateau 3 est constituée d'une canalisation 25 dont la partie en regard du bac 2 présente au moins un perçage (qui n'apparaît pas sur le dessin) et qui permet d'alimenter le bac.

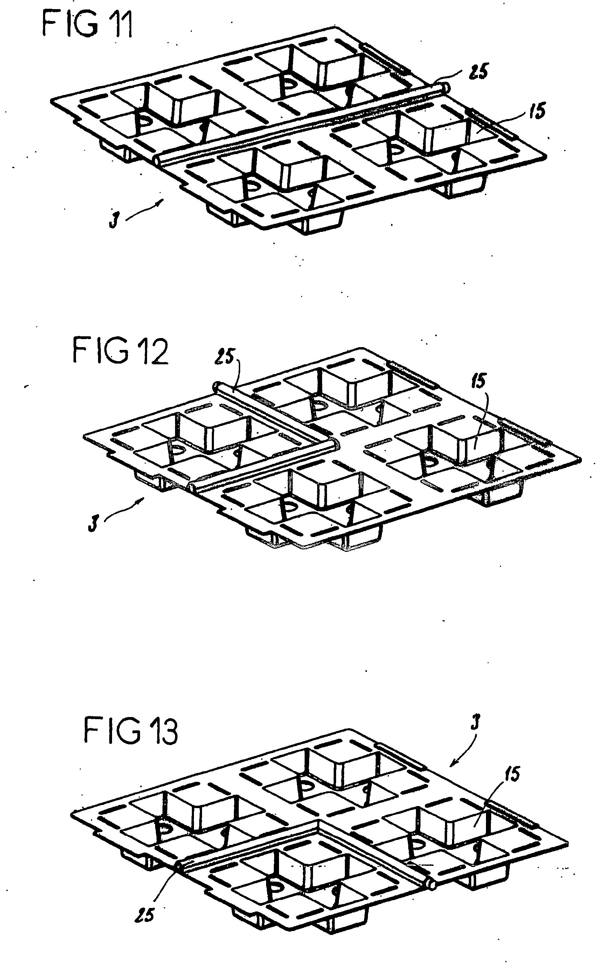

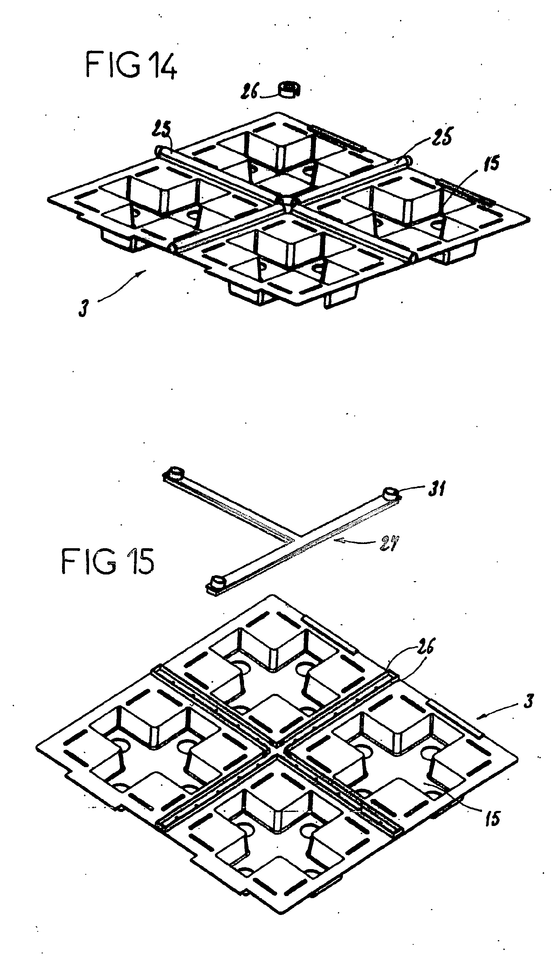

Comme on peut le voir sur les figures 11 à 13, la canalisation 25 relie le milieu des deux côtés opposés du plateau 3 ou la canalisation 25 relie le milieu des côtés consécutifs du plateau 3.

Le plateau 3 peut également présenter deux canalisations 25 en forme de croix, comme le montre la figure 14. Un robinet 26 de sélection est placé à l'intersection des canalisations 25, ce qui permet de diriger le flot d'eau.

Dans une autre forme de réalisation illustré à la figure 15, la zone de rupture est délimitée par des nervures 26 sur pouvant recevoir un couvercle 27 pour délimiter un canal d'amenée d'eau. Le couvercle 27 est équipé de raccords 31 à un système d'alimentation en eau.

On note, également, que pour un meilleur positionnement du bac et, donc, du dispositif, la face inférieure du bac est pourvue de picots 28 comme le montre la figure 10.

De façon avantageuse, le plateau 3 présente sur l'un de ses cotés une emboîture mâle 29 et sur son coté opposé au premier une emboîture femelle 30 ce qui permet d'éviter que du substrat de culture ne tombe dans le bac lorsque le dispositif est en opération.

L'invention fournit ainsi un dispositif à réserve d'eau ayant les nombreux avantages indiqués plus haut.

Il va de soi que l'invention n'est pas limitée aux formes de réalisation décrites ci-dessus à titre d'exemple non limitatif mais qu'elle en embrasse au contraire toutes les variantes de réalisation.

## Revendications

1. Dispositif à réserve d'eau pour la culture d'une surface engazonnée comprenant :
- un bac (2) présentant une paroi de fond (4) et des parois latérales (5), le bac (2) étant destiné à contenir un liquide, et
- un plateau (3) prenant place dans le bac (2), destiné à supporter un substrat de culture et présentant au moins un puits (15) dont l'extrémité inférieure communique avec le liquide contenu dans le bac (2),
**caractérisé en ce que** le bac (2) et le plateau (3) présentant chacun une zone de rupture (7,12) en regard l'une de l'autre dont la découpe permet de diviser le dispositif.

2. Dispositif à réserve d'eau selon la revendication 1, **caractérisé en ce que** la paroi de fond (4) du bac forme avec une de ses parois latérales (5) un angle inférieur à 90°.

3. Dispositif à réserve d'eau selon la revendication 1 ou la revendication 2, **caractérisé en ce que** la zone de rupture (7) ménagée dans le bac est délimitée par deux cloisons (8) et la zone de rupture (12) du plateau est délimitée par deux nervures (13).

4. Dispositif à réserve d'eau selon l'une des revendications 1 à 3, **caractérisé en ce que** le bac (2) présente une forme de carré présentant deux zones de rupture (7) reliant le milieu de ses deux côtés opposés et le plateau (3).

5. Dispositif à réserve d'eau selon l'une des revendications 3 à 4, **caractérisé en ce que** le bac (2) présente dans ses parois latérales (5) un épaulement (9) placé à une hauteur égale à celle des cloisons (8), sur lequel la périphérie du plateau (3) vient en appui.

6. Dispositif à réserve d'eau selon l'une des revendications 1 à 5, **caractérisé en ce que** au moins une échancrure (10) est pratiquée dans la partie supérieure des parois (5) latérales du bac (2).

7. Dispositif à réserve d'eau selon l'une des revendications 1 à 6, **caractérisé en ce que**, au moins, un cavalier (18) est engagé sur la partie supérieure de la paroi (5), ce cavalier venant en appui contre le plateau (3).

8. Dispositif à réserve d'eau selon l'une des revendications 1 à 7, **caractérisé en ce que** des lumières (17) sont percées dans la paroi de fond du puits (15).

9. Dispositif à réserve d'eau selon l'une des revendications 1 à 8, **caractérisé en ce que** au moins l'un des coins du bac (2) et du plateau (3) présente une forme d'arc de cercle.

10. Dispositif à réserve d'eau selon l'une des revendications 1 à 5, **caractérisé en ce que** le bac (2) présente, dans au moins l'une de ses parois latérales (5), un embout (20) et dans sa paroi opposée à cette dernière une ouverture (21) équipée d'un joint périphérique susceptible de recevoir l'embout (20) lorsque deux bacs (2) sont disposés de manière adjacente.

11. Dispositif à réserve d'eau selon l'une des revendications 1 à 10, **caractérisé en ce que** le bac (2) présente, dans au moins l'une de ces parois latérales (5), une réservation (22) permettant, lorsque deux bacs (2) sont adjacents, à l'eau de communiquer d'un bac (2) à l'autre.

12. Dispositif à réserve d'eau selon l'une des revendications 1 à 11, **caractérisé en ce que** le plateau (3) présente des moyens d'amenée d'eau dans un bac.

13. Dispositif à réserve d'eau selon la revendication 12, **caractérisé en ce que** la zone de rupture du plateau (3) est constituée d'un profilé (24) en U tourné vers le bac susceptible de recevoir un tuyau d'amenée d'eau.

14. Dispositif à réserve d'eau, selon la revendication 12, **caractérisé en ce que** la zone de rupture du plateau (3) est constituée d'une canalisation (25) dont la partie en regard du bac (2) présente au moins une ouverture.

15. Dispositif à réserve d'eau, selon la revendication 14, **caractérisé en ce que** la canalisation (25) relie le milieu des deux côtés opposés du plateau (3).

16. Dispositif à réserve d'eau, selon la revendication 14, **caractérisé en ce que** la canalisation (25) relie le milieu des côtés consécutifs du plateau (3).

17. Dispositif à réserve d'eau selon la revendication 14, **caractérisé en ce que** le plateau (3) présente deux canalisations (25) en forme de croix.

18. Dispositif à réserve d'eau selon la revendication 17, **caractérisé en ce qu'**un robinet (26) de sélection est placé à l'intersection des canalisations (25).

19. Dispositif à réserve d'eau selon la revendication 12, **caractérisé en ce que** la zone de rupture est délimitée par des nervures (26) sur pouvant recevoir un couvercle (27) pour délimiter un canal d'amenée d'eau.

20. Dispositif à réserve d'eau selon l'une des revendications 1 à 19, **caractérisé en ce que** la face inférieure du bac est pourvue de picots (28).

21. Dispositif à réserve d'eau selon l'une des revendications 1 à 20, **caractérisé en ce que** le plateau présente sur l'un de ses cotés une emboîture male (30) et sur son coté opposé au premier une emboîture femelle (29).

## Claims

1. Device with a reserve of water, for cultivating an area which has been sown with grass seed, said device comprising:
- a tank (2) having a bottom wall (4) and sidewalls (5), said tank (2) being intended to contain a liquid; and
- a tray (3) which is located in the tank (2), is intended to support a cultivating substratum and has at least one shaft (15) whose lower end is in communication with the liquid contained in said tank (2)
**characterised in that** the tank (2) and the tray (3) each have a break-off zone (7, 12), which break-off zones face one another, and the cutting-up of said zones makes it possible to divide the device.

2. Device with a reserve of water, according to Claim 1, **characterised in that** the bottom wall (4) of the tank forms an angle of less than 90° with one of its sidewalls (5).

3. Device with a reserve of water, according to Claim 1 or Claim 2, **characterised in that** the break-off zone (7) provided in the tank is delimited by two partitions (8) and the break-off zone (12) of the tray is delimited by two ribs (13).

4. Device with a reserve of water, according to one of Claims 1 to 3, **characterised in that** the tank (2) has a square shape having two break-off zones (7) connecting the middle of its two opposite sides and the tray (3).

5. Device with a reserve of water, according to one of Claims 3 to 4, **characterised in that** the tank (2) has, in its sidewalls (5), a shoulder (9) which is located at a height equal to that of the partitions (8) and on which the periphery of the tray (3) rests.

6. Device with a reserve of water, according to one of Claims 1 to 5, **characterised in that** at least one cutout (10) is formed in the upper part of the sidewalls (5) of the tank (2).

7. Device with a reserve of water, according to one of Claims 1 to 6, **characterised in that** at least one rider (18) is fitted over the upper part of the wall (5), the said rider resting against the tray (3).

8. Device with a reserve of water, according to one of Claims 1 to 7, **characterised in that** apertures (17) are made in the bottom wall of the shaft (15).

9. Device with a reserve of water, according to one of Claims 1 to 8, **characterised in that** at least one of the corners of the tank (2) and of the tray (3) has the shape of an arc.

10. Device with a reserve of water, according to one of Claims 1 to 5, **characterised in that** the tank (2) has a nozzle (20) in at least one of its sidewalls (5) and, in the wall opposite the latter, an opening (21) equipped with a peripheral seal which is capable of receiving said nozzle (20) when two tanks (2) are disposed in an adjacent manner.

11. Device with a reserve of water, according to one of Claims 1 to 10, **characterised in that** the tank (2) has, in at least one of the said sidewalls (5), a recessed portion (22) which makes it possible for the water to link up from one tank (2) to the other when two tanks (2) are adjacent.

12. Device with a reserve of water, according to one of Claims 1 to 11, **characterised in that** the tray (3) has means for introducing water into a tank.

13. Device with a reserve of water, according to Claim 12, **characterized in that** the break-off zone of the tray (3) is made up of a U-shaped profile (24) which faces towards the tank and is capable of receiving a water supply pipe.

14. Device with a reserve of water, according to Claim 12, **characterised in that** the break-off zone of the tray (3) is made up of a pipe system (25), of which the part that faces the tank (2) has at least one opening.

15. Device with a reserve of water, according to Claim 14, **characterised in that** the pipe system (25) connects the middle of the two opposite sides of the tray (3).

16. Device with a reserve of water, according to Claim 14, **characterised in that** the pipe system (25) connects the middle of the consecutive sides of the tray (3).

17. Device with a reserve of water, according to Claim 14, **characterised in that** the tray (3) has two pipe systems (25) in the shape of a cross.

18. Device with a reserve of water, according to Claim 17, **characterised in that** a selector tap (26) is located at the intersection of the pipe systems (25).

19. Device with a reserve of water, according to Claim 12, **characterised in that** the break-off zone is delimited by ribs (26) on top, which are capable of receiving a cover (27) in order to delimit a water supply conduit.

20. Device with a reserve of water, according to one of Claims 1 to 19, **characterised in that** the lower face of the tank is provided with spikes (28).

21. Device with a reserve of water, according to one of Claims 1 to 20, **characterised in that** the tray has a male fitting (30) on one of its sides and a female fitting (29) on its side which is opposite said first side.

## Patentansprüche

1. Vorrichtung mit Wasservorrat für die Bepflanzung einer Grünfläche, mit:
- einer Schale (2), die eine Bodenwand (4) und Seitenwände (5) aufweist, wobei die Schale (2) dazu bestimmt ist, eine Flüssigkeit zu beinhalten, und
- einer Platte (3), die in der Schale (2) angeordnet wird, die dazu bestimmt ist, ein Bepflanzungssubstrat zu tragen, und die zumindest einen Schacht (15) aufweist, dessen unteres Ende mit der in der Schale (2) enthaltenen Flüssigkeit kommuniziert,
**dadurch gekennzeichnet, dass** die Schale (2) und die Platte (3) jeweils eine einander zugewandte Bruchzone (7, 12) aufweisen, deren Durchtrennung es ermöglicht, die Vorrichtung zu teilen.

2. Vorrichtung mit Wasservorrat nach Anspruch 1, **dadurch gekennzeichnet, dass** die Bodenwand (4) der Schale mit einer ihrer Seitenwände (5) einen Winkel von weniger als 90° bildet.

3. Vorrichtung mit Wasservorrat nach Anspruch 1 oder Anspruch 2, **dadurch gekennzeichnet, dass** die Bruchzone (7), die in der Schale ausgebildet ist, durch zwei Trennwände (8) begrenzt ist, und dass die Bruchzone (12) der Platte durch zwei Rippen (13) begrenzt ist.

4. Vorrichtung mit Wasservorrat nach einem der Ansprüche 1 bis 3, **dadurch gekennzeichnet, dass** die Schale (2) eine quadratische Form aufweist, die zwei Bruchzonen (7) aufweist, die die Mitte ihrer beiden entgegengesetzten Seiten und die Platte (3) verbinden.

5. Vorrichtung mit Wasservorrat nach einem der Ansprüche 3 bis 4, **dadurch gekennzeichnet, dass** die Schale (2) in ihren Seitenwänden (5) eine Schulter (9) aufweist, die auf einer Höhe angeordnet ist, die derjenigen der Trennwände (8) gleich ist, mit der der Umfang der Platte (3) in Anlage kommt.

6. Vorrichtung mit Wasservorrat nach einem der Ansprüche 1 bis 5, **dadurch gekennzeichnet, dass** zumindest eine Aussparung (10) in dem oberen Bereich der Seitenwände (5) der Schale (2) eingebracht ist.

7. Vorrichtung mit Wasservorrat nach einem der Ansprüche 1 bis 6, **dadurch gekennzeichnet, dass** zumindest ein Reiter (18) mit dem oberen Bereich der Wand (5) in Eingriff steht, wobei der Reiter mit der Platte (3) in Anlage kommt.

8. Vorrichtung mit Wasservorrat nach einem der Ansprüche 1 bis 7, **dadurch gekennzeichnet, dass** Schlitze (17) in der Bodenwand des Schachts (15) vorgesehen sind.

9. Vorrichtung mit Wasservorrat nach einem der Ansprüche 1 bis 8, **dadurch gekennzeichnet, dass** zumindest eine der Ecken der Schale (2) und der Platte (3) eine Kreisbogenform aufweist.

10. Vorrichtung mit Wasservorrat nach einem der Ansprüche 1 bis 5, **dadurch gekennzeichnet, dass** die Schale (2) in zumindest einer ihrer Seitenwände (5) einen Zapfen (20) und in ihrer dieser entgegengesetzten Wand eine Öffnung (21) aufweist, die mit einer umfänglichen Dichtung ausgestattet ist, die in der Lage ist, den Zapfen (20) aufzunehmen, wenn zwei Schalen (2) benachbart angeordnet werden.

11. Vorrichtung mit Wasservorrat nach einem der Ansprüche 1 bis 10, **dadurch gekennzeichnet, dass** die Schale (2) in zumindest einer ihrer Seitenwände (5) eine Ausschneidung (22) aufweist, die es ermöglicht, dass Wasser von einer Schale (2) in die andere übertritt, wenn zwei Schalen (2) benachbart sind.

12. Vorrichtung mit Wasservorrat nach einem der Ansprüche 1 bis 11, **dadurch gekennzeichnet, dass** die Platte (3) Mittel zum Einbringen von Wasser in eine Schale aufweist.

13. Vorrichtung mit Wasservorrat nach Anspruch 12, **dadurch gekennzeichnet, dass** die Bruchzone der Platte (3) durch ein Profil (24) in Form eines zu der Schale hingekehrten U gebildet ist, das in der Lage ist, einen Wasserzuführschlauch aufzunehmen.

14. Vorrichtung mit Wasservorrat nach Anspruch 12, **dadurch gekennzeichnet, dass** die Bruchzone der Platte (3) durch eine Rohrleitung (25) gebildet ist, deren der Schale (2) zugewandter Bereich zumindest eine Öffnung aufweist.

15. Vorrichtung mit Wasservorrat nach Anspruch 14, **dadurch gekennzeichnet, dass** die Rohrleitung (25) die Mitte der beiden entgegengesetzten Seiten der Platte (3) verbindet.

16. Vorrichtung mit Wasservorrat nach Anspruch 14, **dadurch gekennzeichnet, dass** die Rohrleitung (25) die Mitte der aufeinander folgenden Seiten der Platte (3) verbindet.

17. Vorrichtung mit Wasservorrat nach Anspruch 14, **dadurch gekennzeichnet, dass** die Platte (3) zwei Rohrleitungen (25) in Form eines Kreuzes aufweist.

18. Vorrichtung mit Wasservorrat nach Anspruch 17, **dadurch gekennzeichnet, dass** ein Wählhahn (26) an der Schnittstelle der Rohrleitungen (25) angeordnet ist.

19. Vorrichtung mit Wasservorrat nach Anspruch 12, **dadurch gekennzeichnet, dass** die Bruchzone durch Rippen (26) begrenzt ist, die einen Deckel (27) aufnehmen können, um einen Wasserzuführkanal zu begrenzen.

20. Vorrichtung mit Wasservorrat nach einem der Ansprüche 1 bis 19, **dadurch gekennzeichnet, dass** die Unterseite der Schale mit Zähnchen versehen ist.

21. Vorrichtung mit Wasservorrat nach einem der Ansprüche 1 bis 20, **dadurch gekennzeichnet, dass** die Platte auf einer ihrer Seiten eine männliche Verbindungsstelle (30) und auf ihrer der ersteren entgegengesetzten Seite eine weibliche Verbindungsstelle (29) aufweist.
